# EUROPEAN PATENT APPLICATION

(11) **EP 1 708 512 A1**
(43) Date of publication of application: **04.10.2006**
(21) Application number: 05007089.5
(22) Date of filing: 31.03.2005
(51) Int. Cl.: H04N 9/31, H04N 5/74, G02B 27/14, G03B 21/00

(54) **Image generation unit with four primary colors**

(71) Applicant: SONY DEUTSCHLAND GmbH, 50829 Köln (DE)
(72) Inventor: Kamm, Markus c/o Stuttgart Technology Center, 70327 Stuttgart (DE)
(74) Representative: Müller - Hoffmann & Partner

(57) **Abstract**

An image generating unit (10) is provided wherein spectral splitting functionalities, image generating functionalities and spectral recombination functionalities are essentially realized by an arrangement (10') of first and second polarization selective beam splitting device (11, PBS1; 12, PBS2), first to fourth image generating means (P1, P2, P3, P4) and a single dichroic beam splitting device (13, DBS) within a spectral splitting, image generating, and spectral recombining section (SSR) of the proposed image generating unit (10).

## Description

The present invention relates to an image generation unit.

The present invention more particular relates to a four-colour imaging unit, i.e. an image generating unit which e.g. uses besides the common primary colours red, green and blue a fourth primary colour, for instance yellow, in the sense that highly saturated colours and partial images can be obtained by also using light which is waste light in common or prior art image generating units.

It is a basic aspect of the progress of image generating units to achieve a high saturation of colours in full colour displays. On the other hand it is a further aspect to built the used primary colours or spectra spectrally as narrow as possible or at least sufficient narrow with respect to the respective spectral properties.

In many cases, imaging devices use a white light source in order to produce primary illumination light which is used for the generation of partial images. However, a considerable amount of light of the produced white light is spectrally positioned outside the band width of the generally used primary illumination light components for instances of the colours red, green and blue. Therefore, the usage of a fourth primary colour, for instance yellow, as a realization of the waste light has been proposed. However, common concepts of realizing such four primary colour image generation techniques involve a considerable large amount of optical components in order to realize the distinct four primary colours and the distinct four partial images.

It is an aspect of the present invention to realize an image generating unit on the basis of a four primary colour concept which is capable of reliably producing partial images on the basis of four primary colours and which at the same time has a comparable low number of optical components and therefore a comparable reduced spatial and optical extension.

The object is achieved according to the present invention with an image generating unit according to the features of independent claim 1. Preferred embodiments of the inventive image generating unit are within the scope of the dependent subclaims.

According to one aspect of the present invention aimage generating unit is provided which is adapted/or arranged:
- in order to generate in a first part PS primary illumination light L1, which comprises four spectral ranges SP1, SP2, SP3, SP4, which can be spectrally disjunct or overlapping and with light components L1r and L1b corresponding to the spectral ranges SP1 and SP3, respective, being s-polarized and light components L1g and L1y corresponding to spectral ranges SP2, SP4, respective, being p-polarized.
- in order to receive in a second part SSR primary illumination light L1, which comprises four spectral ranges SP1, SP2, SP3, SP4, which can be spectrally disjunct or overlapping and with light components L1r and L1b corresponding to the spectral ranges SP1 and SP3, respective, being s-polarized and light components L1g and L1y corresponding to spectral ranges SP2 and SP4, respective, being p-polarized.
- in order to generate based on said first, second, third and fourth primary illumination light components L1r, L1g, L1b, L1y first, second, third and fourth secondary illumination light components L2r, L2g, L2b, L2y for first, second, third and fourth partial images Ir, Ig, Ib, Iy, respectively, of an image I to be generated and to be displayed and
- in order to recombine said first, second, third and fourth secondary illumination light components L2r, L2g, L2b, L2y of said first, second, third and fourth partial images Ir, Ig, Ib, Iy in order to thereby generate and output secondary illumination light L2 as light for said image I to be generated and to be displayed,
- wherein a light entrance section E is provided which is adapted and/or arranged in order to receive said primary illumination light L1,
- wherein a light output section O is provided which is adapted and/or arranged in order to output said secondary illumination light L2,
- wherein a first polarizing beam splitter PBS 1 is adapted to receive said first and second primary light components L1r, L1g, with a polarizing surface adapted to reflect s-polarized light toward a first image generating means P1 and to transmit p-polarized light toward a second image generating means P2,
- wherein a second polarizing beam splitter PBS2 is adapted to receive said third and fourth primary light components L1b, L1y, with a polarizing surface adapted to reflect s-polarized light toward a third image generating means P3 and to transmit p-polarized light toward a fourth image generating means P4,
- wherein said first polarizing beam splitter PBS1 is adapted to receive said first and second secondary light components L2r, L2g, which are reflected from said first and second image generating means P1, P2 and with a polarizing surface adapted to reflect s-polarized light and to transmit p-polarized light,
- wherein said second polarizing beam splitter PBS2 is adapted to receive said third and fourth secondary light components L2b, L2y, which are reflected from said third and fourth image generating means P3, P4 and with a polarizing surface adapted to reflect s-polarized light and to transmit p-polarized light,
- wherein a dichroic beam splitter DBS is adapted to receive through a first surface first and second secondary light components L2r, L2g and through a second surface third and fourth secondary light components L2b, L2y and with a dichroic surface adapted to transmit first and second secondary light components L2r, L2g and to reflect third and fourth secondary light components L2b, L2y and
- wherein said dichroic beam splitter DBS is adapted to output the first, second, third and fourth secondary light components L2r, L2g, L2b, L2y through a third surface for first, second, third and fourth partial images Ir, Ig, Ib, Iy, respectively, of an image I to be generated and to be displayed.

A fourth polarizing beam splitter PBS4 may preferably be adapted and/or arranged in said entrance section E in order to reflect said first primary light component L1r and to transmit said second primary light component L1g in direction of said first polarizing beam splitter PBS1, and to reflect said third primary light component L1b and to transmit said fourth primary light component L1y in direction of said second polarizing beam splitter PBS2.

Preferably, said first part PS is adapted and/or arranged:
- in order to receive illumination light L1, which is polarized e.g. s-polarized and which spectral range covers said first, second, third and fourth spectral ranges SP1, SP2, SP3 and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r, L1g,
- to combine the light of said third and fourth spectral ranges SP3, SP4 in a coincident and/or parallel light path in order to serve as said third and fourth primary light component L1b, L1y,
- wherein a first dichroic mirror is adapted and/or arranged in order to split light of said first and fourth spectral range SP1, SP4 from light of said second and third spectral range SP2, SP3,
- wherein a second dichroic mirror is adapted and/or arranged in order to split light of, said second spectral range SP2 from light of said third spectral range SP3
- wherein a third dichroic mirror is adapted and/or arranged in order to split light of said first spectral range SP1 from light of said fourth spectral range SP4,
- wherein optical means e.g. a folding mirror and a fifth dichroic mirror are adapted and/or arranged in order to combine light of said first spectral range SP1 with light of said second spectral range SP2 to a coincident and/or parallel light path as first and second primary light component L1r, L1g, respective,
- wherein optical means e.g. a folding mirror and a fourth dichroic mirror are adapted and/or arranged in order to combine light of said third spectral range SP3 and light of said fourth spectral range SP4 to a coincident and/or parallel light path as third and fourth primary light component L1b, L1y, respective,
- wherein retarder plates e.g. halve wave plates, HWP are adapted and/or arranged in order to change and/or keep the polarization of said first and third primary light component L1r, L1b in a s-polarized mode and of said second and fourth primary light component L1g, L1y in a p-polarized mode.

Advantageously, said first part is adapted and/or arranged:
- in order to receive illumination light L1, which is polarized e.g. s-polarized and which spectral range covers said first, second, third and fourth spectral ranges SP1, SP2, SP3 and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r, L1g,
- to combine the light of said third and fourth spectral ranges SP3, SP4 in a coincident and/or parallel light path in order to serve as said third and fourth primary light component L1b, L1y,
- wherein a first dichroic mirror is adapted and/or arranged in order to split light of said first and second spectral range SP1, SP2 from light of said third and fourth spectral range SP3, SP4,
- wherein a second dichroic mirror is adapted and/or arranged in order to split light of said first spectral range SP1 from light of said second spectral range SP2,
- wherein a third dichroic mirror is adapted and/or arranged in order to split light of said third spectral range SP3 from light of said fourth spectral range SP4,
- wherein optical means e.g. two folding mirrors and a fifth dichroic mirror are adapted and/or arranged in order to combine light of said first spectral range SP1 with light of said second spectral range SP2 to a coincident and/or parallel light path as first and second primary light component L1r, L1g, respective,
- wherein optical means e.g. two folding mirrors and a fourth dichroic mirror are adapted and/or arranged in order to combine light of said third spectral range SP3 and light of said fourth spectral range SP4 to a coincident and/or parallel light path as third and fourth primary light component L1b, L1y, respective,
- wherein retarder plates e.g. halve wave plates, HWP are adapted and/or arranged in order to change and/or keep the polarization of said first and third primary light component L1r, L1b in a s-polarized mode and light of said second and fourth primary light component L1g, L1y in a p-polarized mode.

Additionally or alternatively, said first, second, third and fourth spectral ranges SP1, SP2, SP3 and SP4 and accordingly said first, second, third and fourth primary light components are taken in any other order in particular to swap SP1 with SP3 and accordingly L1 with L1b.

Said fourth dichroic mirror may be replaced by a polarizing beam splitter.

Said fifth dichroic mirror may be replaced by a polarizing beam splitter.

According to a preferred embodiment of the present invention, said first part PS is adapted and/or arranged:
- in order to receive illumination light L1, which is polarized e.g. s-polarized and which spectral range covers said first, second, third and fourth spectral ranges SP1, SP2, SP3 and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r, L1g,
- to combine the light of said third and fourth spectral ranges SP3, SP4 in a coincident and/or parallel light path in order to serve as said third and fourth primary light component L1b, L1y,
- wherein a first color selective retarder CSR1 is adapted and/or arranged in order to keep and/or change the polarization state of light of two of said four spectral ranges to be p-polarized and of light of the complementary spectral ranges to be s-polarized,
- wherein a fourth polarizing beam splitter is adapted and/or arranged in order to split the s-polarized light from the p-polarized light,
- wherein a second color selective retarder CSR2 is adapted and/or arranged in order to change and/or keep the polarization state of light of said first spectral range SP1 to be s-polarized and of light of said second spectral range SP2 to be p-polarized.
- wherein a third color selective retarder CSR3 is adapted and/or arranged in order to change and/or keep the polarization state of light of said third spectral range SP3 to be s-polarized and of light of said fourth spectral range SP4 to be p-polarized.

Additionally or alternatively, said first part PS is adapted and/or arranged:
- in order to receive illumination light, which is polarized e.g. s-polarized and which spectral range covers said first, second, third and fourth spectral ranges SP1, SP2, SP3 and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r, L1g,
- to combine the light of said third and fourth spectral ranges SP3, SP4 in a coincident and/or parallel light path in order to serve as said third and fourth primary light component L1b, L1y,
- wherein a dichroic beam splitter DBS2 splitter is adapted and/or arranged in order to split light of said first and second spectral range SP1, SP2 from light of said third and fourth spectral range SP3, SP4,
- wherein said second color selective retarder CSR2 is adapted and/or arranged in order to change and/or keep the polarization state of light of said first spectral range SP1 to be s-polarized and of light of said second spectral range SP2 to be p-polarized.
- wherein said third color selective retarder CSR3 is adapted and/or arranged in order to change and/or keep the polarization state of light of said third spectral range SP3 to be s-polarized and of light of said fourth spectral range SP4 to be p-polarized.

Between said first polarizing beam splitting device PBS and said dichroic beam splitting device DBS and/or between said second polarizing beam splitting device PBS2 and said dichroic beam splitting device DBS there may preferably be provided a respective color selective polarizer CSP1, CSP2 which is in each case adapted and/or arranged in order to block the p-polarized part and to transmit the s-polarized part of said second and fourth secondary illumination light components, respective, and to transmit the p-polarized part of said first and third secondary illumination light components, respective, in particular in order to enhance the contrast of the optical engine.

It is of further advantage, if between said first polarization selective or polarizing beam splitting device 11, PBS1 and said dichroic beam splitting device 13, DBS and/or between said second polarization selective or polarizing beam splitting device 12, PBS2 and said dichroic beam splitting device 13, DBS there is provided a respective polarization correction unit CSP1, CSP2 which is in each case adapted and/or arranged in order to change a respective polarization state of inciding light to a s polarized polarization state or to a p polarized polarization state, in particular in order to enhance the reflection functionality and/or the transmission functionality of the dichroic beam splitting device 13, DBS in particular with respect to said first, second, third, and fourth secondary illumination light component L2r, L2g, L2b, L2y.

Said first and/or second color selective polarizer comprises cholesteric layers which may be stacked between two quarter-wave retarders.

Said first and/or second color selective polarizers may comprise absorptive dyes which are transparent in said first and/or third spectral ranges, respective, and which work as absorptive polarizers in said second and/or fourth spectral ranges, respective.

Said first and/or second color selective polarizers may comprise a color selective retarder in order to change the polarization of light in one spectral range by 90 degrees and to keep the polarization of light in the complementary spectral part unchanged and an absorptive broadband polarizer which is adapted and/or arranged in order to absorb light in either the changed or the unchanged polarization state.

Said first, second, third and fourth spectral ranges SP1, SP2, SP3, SP4 may correspond to the colors red, green, blue and yellow in any combination.

Said first, second, third and fourth spectral ranges SP1, SP2, SP3, SP4 may correspond to the colors red, green, blue and cyan in any combination.

### In the following, a more general view of the present invention is given:

According a more general aspect of the present invention an image generating unit is provided which is adapted and/or arranged in order to receive primary illumination light, in order to spectrally split from said primary illumination light first, second, third and fourth primary illumination light components which are at least essentially or completely spectrally disjunced, non-overlapping and/or complementary with respect to each other and with respect to the entire primary illumination light. Further, the inventive image generation unit is adapted and/or arranged in order to generate based on said first, second, third and fourth primary illumination light components first, second, third and fourth secondary illumination light components of secondary illumination light for first, second, third, and fourth partial images of an image to be generated and to be displayed and in order to recombine said first, second, third, and fourth secondary illumination light components of said first, second, third, and fourth partial images in order to thereby generate and output said secondary illumination light as light for said image to be generated and to be displayed.

According to the present invention within said image generating unit a light entrance section is provided which is adapted and/or arranged in order to receive said primary illumination light. A spectral splitting, image generating and spectral recombining section is provided which is or comprises an arrangement of a first and a second polarization selective or polarizing beam splitting device, first, second, and third, fourth image generating means associated therewith, respectively, and a single or one dichroic beam splitting device. Additionally, according to the present invention a light output section is provided which is adapted and/or arranged in order to output said secondary illumination light as light for said image to be generated and to be displayed.

According to the present invention said spectral splitting functionality, said image generating functionality and said spectral recombining functionality or basic parts thereof are in its entity or essentially realized by the optical arrangement of or within the spectral splitting, image generating, and spectral recombination or recombining section which is built up by said first and said second polarization selective or polarizing beam splitting devices, by said first to fourth image generating means, and by said single or one dichroic beam splitting device of said spectral splitting, image generating and spectrally recombining section of the inventive generating unit.

It is therefore a basic aspect of the present invention to realize the main functionalities of the inventive image generating unit or basic parts thereof, i.e. the spectral splitting functionality, the image generating functionality and the spectral recombination functionality, in its entity or essentially by a limited number of optical components, i.e. by the arrangement of provided first and second polarization selective or polarizing beam splitting devices, provided first to fourth image generating means, and a single provided dichroic beam splitting device which built in its entity a spectral splitting, image generating, and spectral recombining section of the inventive image generating unit.

According to a preferred embodiment of the present invention said first polarization selective or polarizing beam splitting device has assigned and/or arranged a close functional and/or close spatial relationship thereto said first and said second image generating means for said first and said second partial images to be generated, in particular with respect to second and to third faces thereof, respectively.

Additionally or alternatively, said second provided polarization selective or polarizing beam splitting device has assigned and/or arranged a close functional and/or spatial relationship thereto said third and said fourth image generating means for said third and said fourth partial images to be generated, respectively, in particular with respect to provided second and third faces thereof, respectively.

According to a further advantageous embodiment of the inventive image generating unit said first polarization selective or polarizing beam splitting device comprises a first face which is adapted and/or arranged in order to receive said first primary illumination light component of said primary illumination light as light for said first partial image to be generated, in particular in a first or s polarized polarization state and/or in order to receive said second primary illumination light component of said primary illumination light as light for said second partial image to be generated, in particular in a second or p polarized polarization state.

According to a further advantageous embodiment of the present invention said first polarization selective or polarizing beam splitting device comprises a second face which is adapted and/or arranged in order to have said received first primary illumination light component of said primary illumination light as light for said first partial image to be generated left said first polarization selective or polarizing beam splitting device, in particular of said first or s polarized polarization state, and/or in particular to directly or indirectly direct said first primary illumination light component to said first image generating means and/or in order to receive a first secondary illumination light component of secondary illumination light as light of said generated first partial image and in particular directly or indirectly from said first image generating means and/or in particular in said second or p polarized polarization state.

According to a further advantageous embodiment of the present invention said first polarization selective or polarizing beam splitting device comprises a third face which is adapted and/or arranged in order to have said received second primary illumination light component of said primary illumination light as light for said second partial image to be generated left said first polarization selective or polarizing beam splitting device, in particular in said second or p polarized polarization state and/or in particular to directly or indirectly direct said second primary illumination light component to said second image generating means and/or in order to receive a second secondary illumination light component of said secondary illumination light as light of said generated second partial image in particular directly or indirectly from said second image generating means and/or in particular in said first or s polarized polarization state.

Additionally or alternatively, said first polarization selective or polarizing beam splitting device comprises a fourth face which is adapted and/or arranged in order to have said first secondary illumination light component in particular in said second or p polarized polarization state as light of said first partial image and/or said second secondary illumination light component in particular in said first or s polarized polarization state as light of said second partial image left said first polarization selective or polarizing beam splitting device and/or in particular in order to directly or indirectly direct said first secondary illumination light component in particular in said second or p polarized polarization state as light of said first partial image and/or said second secondary illumination light component in particular in said first or s polarized polarization state as light of said second partial image to said dichroic beam splitting device and/or in particular via a first face thereof.

Additionally or alternatively said first polarization selective or polarizing beam splitting device comprises a polarization selective or polarizing interface which is arranged and/or adapted in order to essentially reflect light of said first or s polarized polarization state and/or in order to essentially transmit light of said second or p polarized polarization state.

It is further preferred that said first polarization selective or polarizing beam splitting device comprises a polarization selective or polarizing interface which is arranged and/or adapted in order to essentially reflect said first primary illumination light component from said first face of said first polarization selective or polarizing beam splitting device to said second face of said first polarization selective or polarizing beam splitting device as light for said first partial image to be generated and/or in order to essentially transmit said second primary illumination light component from said first face of said first polarization selective or polarizing beam splitting device to said third face of said first polarization selective or polarizing beam splitting device as light for said second partial image to be generated and/or in order to essentially transmit said first secondary illumination light component from said second face of said first polarization selective or polarizing beam splitting device to said fourth face of said polarization selective or polarizing beam splitting device as light of said generated first partial image, in particular in said second or p polarized polarization state and/or in order to essentially reflect said second secondary illumination light component from said third face of said first polarization selective or polarizing beam splitting device to said fourth face of said first polarization selective or polarizing beam splitting device as light of said generated second partial image, in particular in said first or s polarized polarization state.

It is of further advantage if said first image generating means is arranged in proximity to said second face of said first polarization selective or polarizing beam splitting device, in particular in parallel thereto.

Said second image generating means may be arranged in proximity to said third face of said first polarization selective or polarizing beam splitting device, in particular in parallel thereto.

Said single or one dichroic beam splitting device may be arranged in proximity to said fourth face of said first polarization selective or polarizing beam splitting device, in particular with its first face thereof in parallel thereto.

The circumstances described with respect to the first polarization selective or polarizing beam splitting device and its first to fourth faces and its interface may be adopted also for the second polarization selective or polarizing beam splitting device.

Therefore, according to a further preferred embodiment of the inventive image generating unit said second polarization selective or polarizing beam splitting device comprises a first face which is adapted and/or arranged in order to receive said third primary illumination light component of said primary illumination light as light for said third partial image to be generated, in particular in a first or s polarized polarization state, and/or in order to receive said fourth primary illumination light component of said primary illumination light as light for said fourth partial image to be generated, in particular in a second or p polarized polarization state.

Additionally or alternatively, said second polarization selective or polarizing beam splitting device comprises a second face which is adapted and/or arranged in order to have said received third primary illumination light component of said primary illumination light as light for said third partial image to be generated left said second polarization selective or polarizing beam splitting device, in particular in said first or s polarized polarization state, and/or in particular to directly or indirectly direct said third primary illumination light component to said third image generating means and/or in order to receive said third secondary illumination light component of said secondary illumination light as light of said generated third partial image in particular directly or indirectly from said third image generating means and/or in particular in said second or p polarized polarization state.

According to a further alternative or additional embodiment of the inventive image generating unit said second polarization selective or polarizing beam splitting device comprises a third face which is adapted and/or arranged in order to have said received fourth primary illumination light component of said primary illumination light for said fourth partial image to be generated left said second polarization selective or polarizing beam splitting device, in particular in said second or p polarized polarization state, and/or in particular to directly or indirectly direct said fourth primary illumination light component to said fourth image generating means and/or in order to receive a fourth secondary illumination light component of said secondary illumination light as light of said fourth generated partial image in particular directly or indirectly from said fourth image generating means and/or in particular in said first or s polarized polarization state.

Further additionally or alternatively, said second polarization selective or polarizing beam splitting device comprises a fourth face which is adapted and/or arranged in order to have said third secondary illumination light component in particular in said second or p polarized polarization state as light of said third partial image and/or said fourth secondary illumination light component in particular in said first or s polarized polarization state as light of said fourth generated partial image left said second polarization selective or polarizing beam splitting device and/or in particular in order to directly or indirectly direct said third secondary illumination light component in particular in said second or p polarized polarization state as light of said third partial image and/or said fourth secondary illumination light component in particular in said first or s polarized polarization state as light of said fourth partial image to said dichroic beam splitting device and/or in particular via a second face thereof.

It is of further advantage if said second polarization selective or polarizing beam splitting device comprises a polarization selective or polarizing interface which is arranged and/or adapted in order to essentially reflect light of said first or s polarized polarization state and in order to essentially transmit light of said second or p polarized polarization state.

According to a further advantageous embodiment of the present invention said second polarization selective or polarizing beam splitting device comprises a polarization selective or polarizing interface which is arranged and/or adapted in order to essentially reflect said third primary illumination light component from said first face of said second polarization selective or polarizing beam splitting device to said second face of said second polarization selective or polarizing beam splitting device as light for said third partial image to be generated. Additionally or alternatively, said interface is adapted and/or arranged in order to essentially transmit said fourth primary illumination light component from said first face of said second polarization selective or polarizing beam splitting device to said third face of said second polarization selective or polarizing beam splitting device as light for said fourth partial image to be generated and/or in order to essentially transmit said third secondary illumination light component from said second face of said second polarization selective or polarizing beam splitting device to said fourth face of said second polarization selective or polarizing beam splitting device as light of said generated third partial image, in particular in said second or p polarized polarization state, and/or in order to essentially reflect said fourth illumination light component from said third face of said second polarization selective or polarizing beam splitting device to said fourth face of said second polarization selective or polarizing beam splitting device as light of said generated fourth partial image, in particular in said first or s polarized polarization state.

According to a further advantageous embodiment of the inventive image generating unit said third image generating means is arranged in proximity to said second face of said second polarization selective or polarizing beam splitting device, in particular in parallel thereto.

Further in additional or alternatively, said fourth image generating means is arranged in proximity to said third face of said second polarization selective or polarizing beam splitting device, in particular in parallel thereto.

It is of further advantage if said dichroic beam splitting device is arranged in proximity to said fourth face of said second polarization selective or polarizing beam splitting device, in particular with its first face thereof in parallel thereto.

Said dichroic beam splitting device preferably comprises a first face which is adapted and/or arranged in order to receive said first secondary illumination light component as light of said generated first partial image and/or said second secondary illumination light component as light of said generated second partial image.

Further in addition or alternatively, said dichroic beam splitting device comprises a second face which is arranged and/or adapted in order to receive said third secondary illumination light component as light of said generated third partial image and/or said fourth secondary illumination light component as light of said generated fourth partial image.

It is of further advantage to have a third face in said dichroic beam splitting device which is adapted and/or arranged in order to have said received first, second, third, and/or fourth illumination light components of said secondary illumination light as light of said generated first, second, third, and fourth partial images, respectively, left said dichroic beam splitting device and in particular to directly or indirectly direct said received first, second, third, and/or fourth secondary illumination light components of said secondary illumination light as light of said generated first, second, third, and fourth partial images, respectively, to provide projection optics.

It is of further advantage that said dichroic beam splitting device comprises a spectral selective or spectrally separating interface which is adapted and/or arranged in order to essentially transmit light of or within a first spectral range from said first face of said dichroic beam splitting device to said third face of said dichroic beam splitting device and/or in order to essentially reflect light of or within a second spectral range from said second face of said dichroic beam splitting device with said third face of said dichroic beam splitting device.

Further advantageously said dichroic beam splitting device according to a further preferred embodiment of the present invention comprises a spectral selective or a spectrally separating interface which is adapted and/or arranged in order to essentially transmit said received first and said second secondary illumination light components of said secondary illumination light as light of said generated first and second partial images, respectively, from said first face of said dichroic beam splitting device to said third face of said dichroic beam splitting device and/or in order to essentially reflect said received third and fourth secondary illumination light components of said secondary illumination light as light of said generated third and fourth partial images from said second face of said dichroic beam splitting device to said third face of said dichroic beam splitting device.

It is of further advantage to provide between said first polarization selective or polarizing beam splitting device and said dichroic beam splitting device and/or between said second polarization selective or polarizing beam splitting device and said dichroic beam splitting device a respective polarization correction unit which is adapted in order to change a respective polarization state of light to a s polarized polarization state or to a p polarized polarization state, in particular in order to enhance the reflection functionalities and/or the transmission functionalities of a dichroic beam splitting device with respect to said first, second, third, and fourth secondary illumination light components.

These and further aspects of the present invention are explained in other words by taking reference to the following remarks:
The present invention in particular relates to a four colour imaging unit.

To achieve highly saturated colours in full colour displays, the bandwidth of each primary colour has to be sufficient narrow. Imaging devices using white light sources, e.g. projectors, waste a lot of light outside the bandwidth of the primary colours red, green and blue.

This invention inter alia describes a solution how to use a fourth primary colour (yellow) in a projection unit in order to have both highly saturated colours as well as an efficient way of using the white light source.

Today's projectors superimpose images in the primary colours red, green and blue in order to depict a full colour image. For highly saturated colours the bandwidth of each primary colour has to be sufficient small. Thereby, when using white light sources, a lot of light outside the bandwidth of the primary colours red, green and blue is wasted. In particular when using arc lamps of the UHP (=Ultra high pressure) type, a huge amount of yellow light is lost.

The publication (1)from the SID 2003 conference - S. Roth et al., "Wide Gamut, High Brightness Multiple Primaries Single Panel Projection Displays", SID 2003 Digest, pp. 118-121 - proposes the use of one or two additional primary colours in a projection engine in order to have both more saturated colours and high brightness.

Today's projectors superimpose images in the primary colours red, green and blue in order to depict a full colour image. For highly saturated colours the bandwidth of each primary colour has to be sufficient small. Thereby, when using white light sources, a lot of light outside the bandwidth of the primary colours red, green and blue is wasted. In particular when using arc lamps of the UHP (=Ultra high pressure) type, a huge amount of yellow light is lost.

Today's projectors superimpose images in the primary colours red, green and blue (RGB) in order to depict a full colour image.

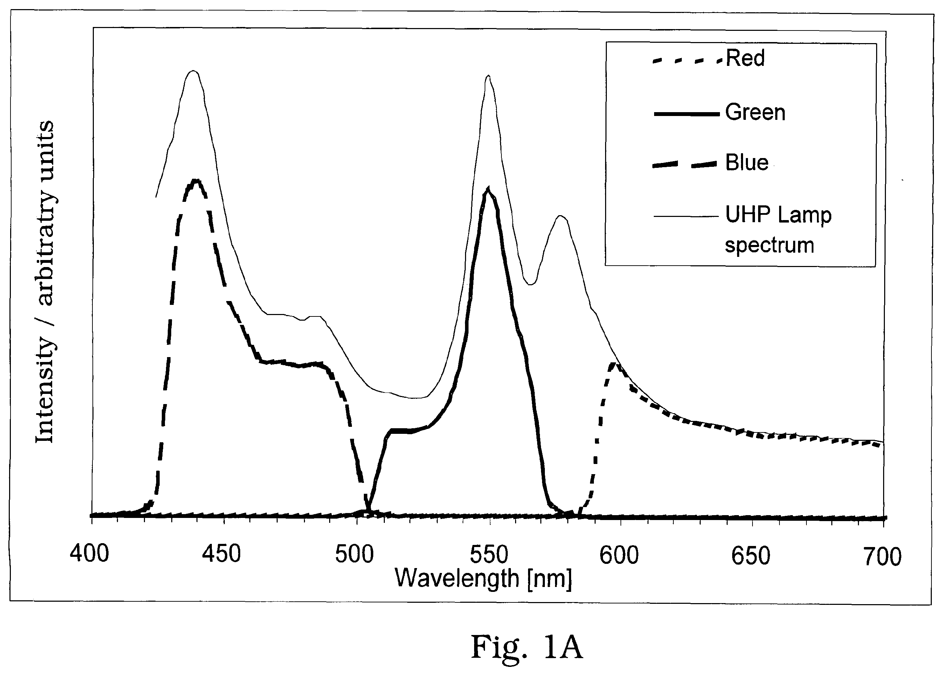

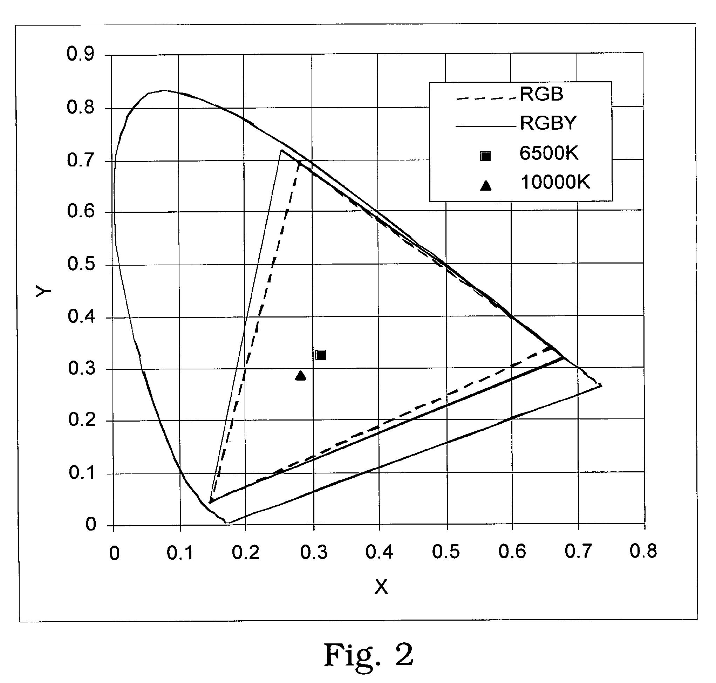

Fig. 1A shows the wavelength spectrum of the red, green and blue light path in a typical RGB projector. This spectra are compared to the full spectrum of the UHP (Ultra High Pressure) lamp. The bandwidth of each primary spectrum is adjusted to achieve a good colour saturation for red, green and blue. The colour gamut is shown in Fig. 2. It can be seen from Figure 1A. that almost the full peak in the yellow wavelength band around 580 nm is cut in order to achieve the required colour saturation. Due to this loss of yellow light the remaining lamp spectrum is too bluish. In order to adjust this bluish white to a reasonable colour point, e.g. a colour temperature of 10000 K, the intensities in green and blue light have to be reduced by 25% each. In total only 59 % of the photometric weighted spectrum of the lamp can be used, the rest is lost. Even more, when adjusting the white colour point to a colour temperature of 6500 K (standard white), only 51 % of the photometric weighted spectrum of the lamp can be used.

To overcome these losses, the otherwise lost yellow light can be used to illuminate a fourth image panel. This invention describes how to split white light into four primary colours red, green, blue and yellow, how to illuminate each image panels with one primary colour and how to recombine the light coming from the four image panels to a full colour image.

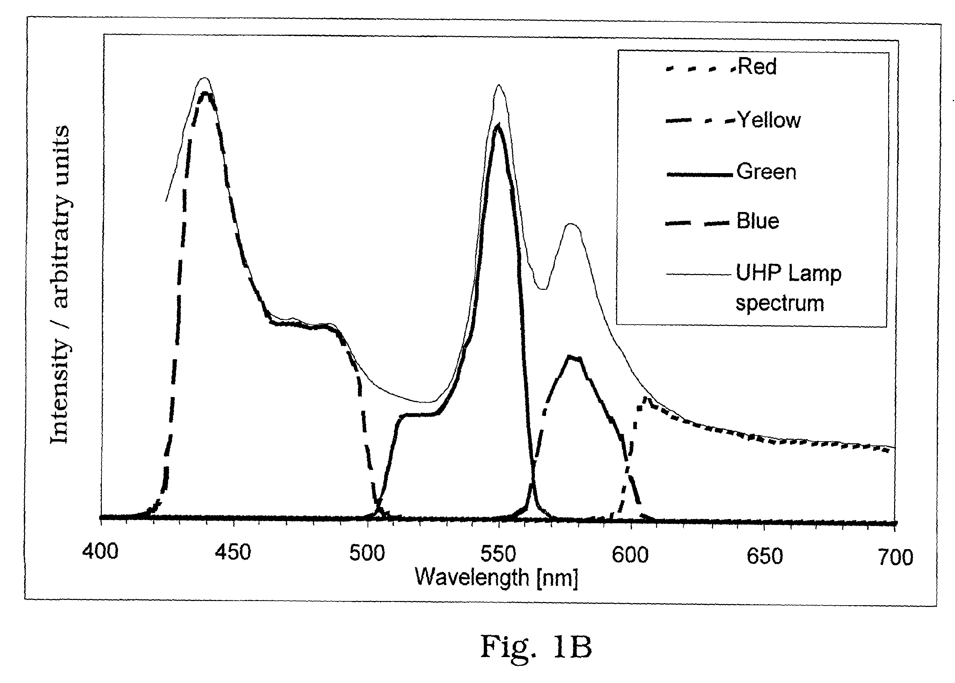

Fig. 1B shows the wavelength spectrum of the red, green, blue and yellow (RGBY) light path. This spectra are compared to the full spectrum of the UHP (Ultra High Pressure) lamp. The colour gamut is shown in Fig. 2. It can be seen that the colour gamut is much wider compared to the RGB projector. The green and the red primary colour are more saturated. More saturated tough the primary colours are, even the luminous efficiency is much better. 76 % of the photometric weighted spectrum can be used when adjusting the white colour point to a colour temperature of 10000 K. And even more, e.g. 81%, can be used when adjusting to a colour temperature of 6500 K (standard white):

| White color point | UHP spectrum efficiency | | Gain |
|---|---|---|---|
| | RGB projector | RGBY projector | |
| 6500 K | 51 % | 81 % | +59 % |
| 10000 K | 59 % | 76% | +29 % |

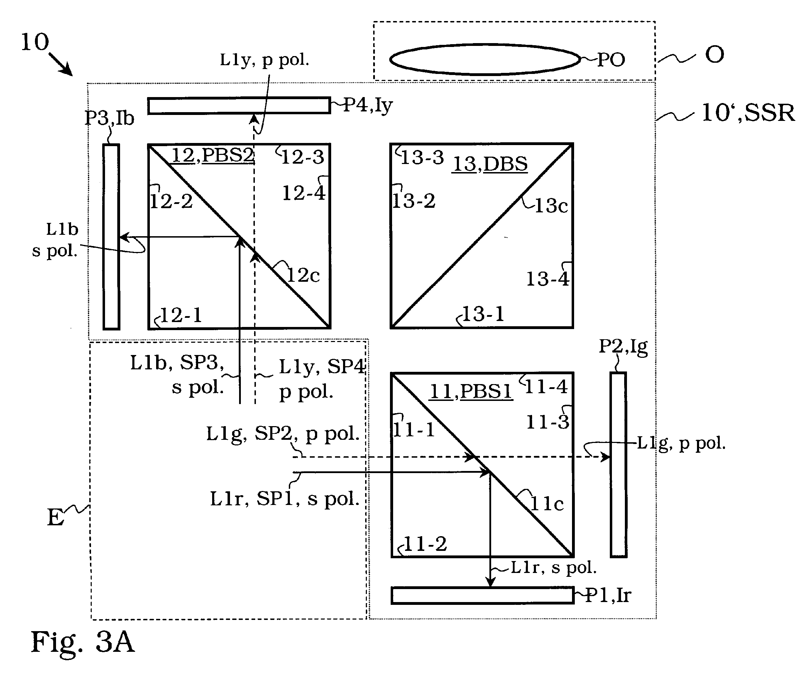

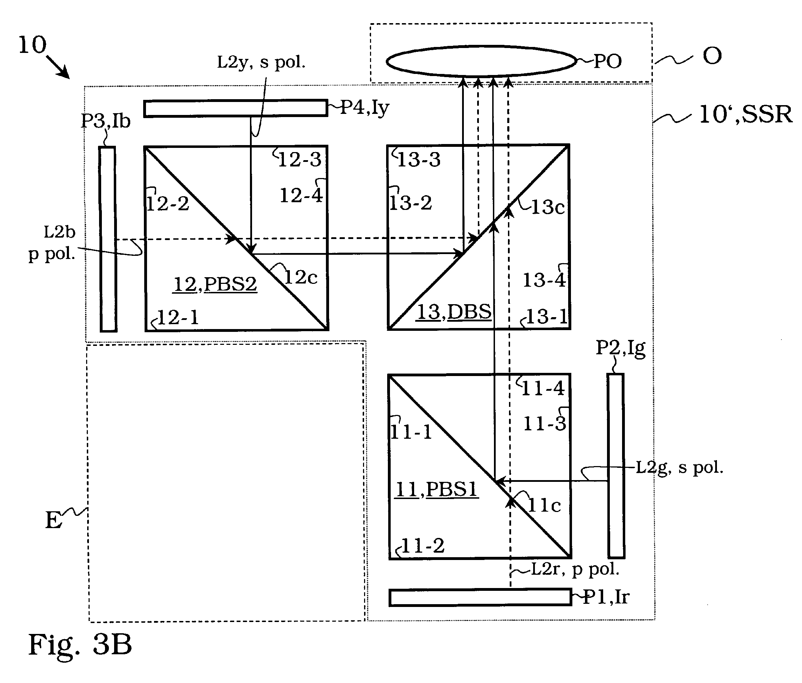

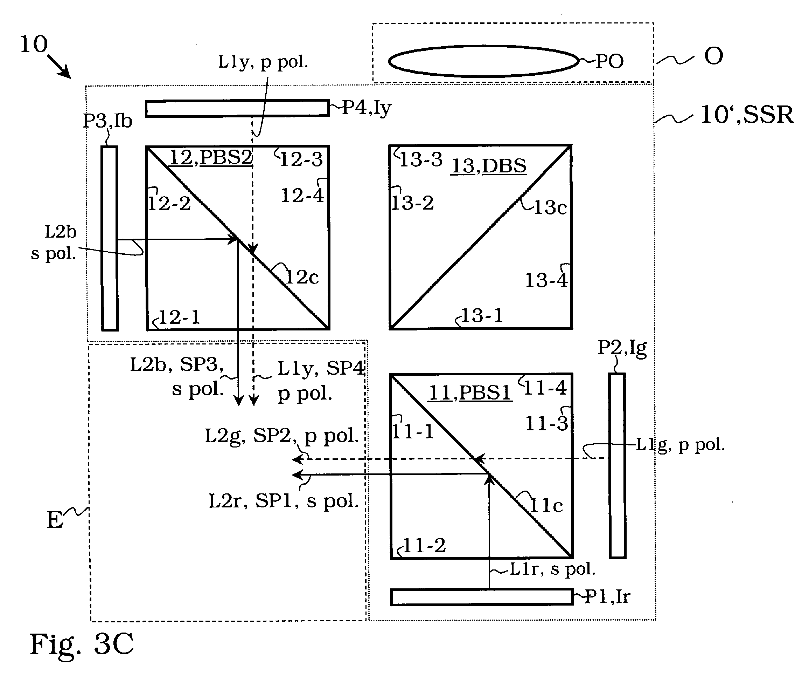

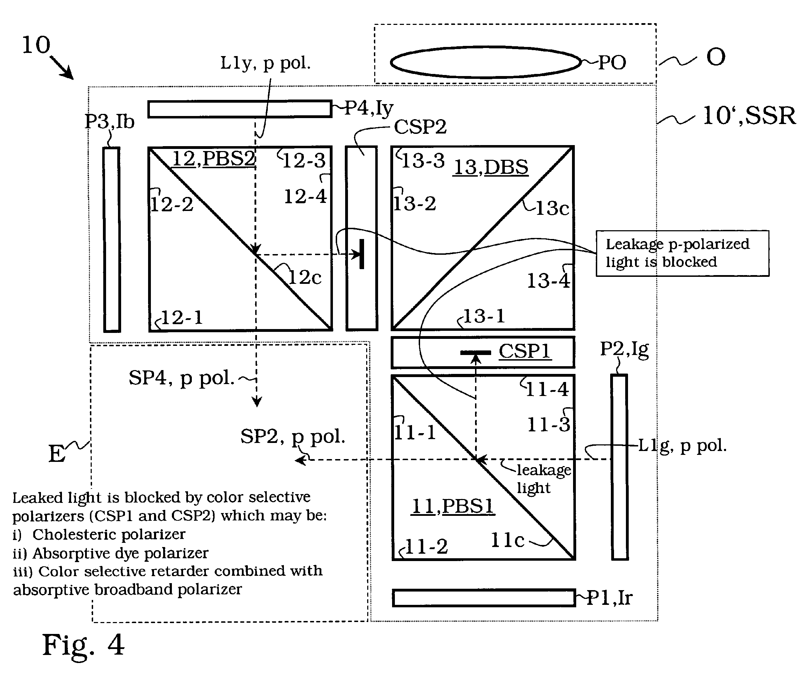

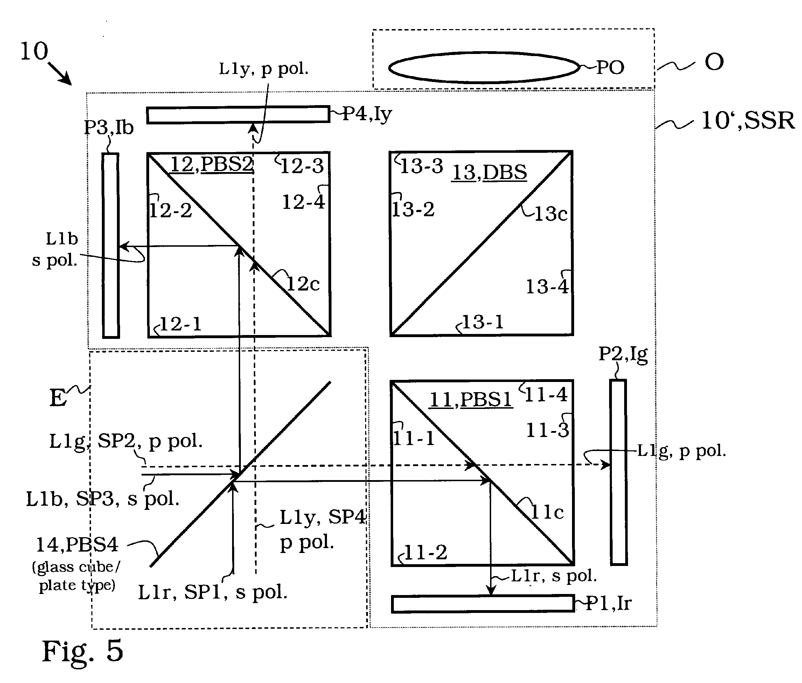

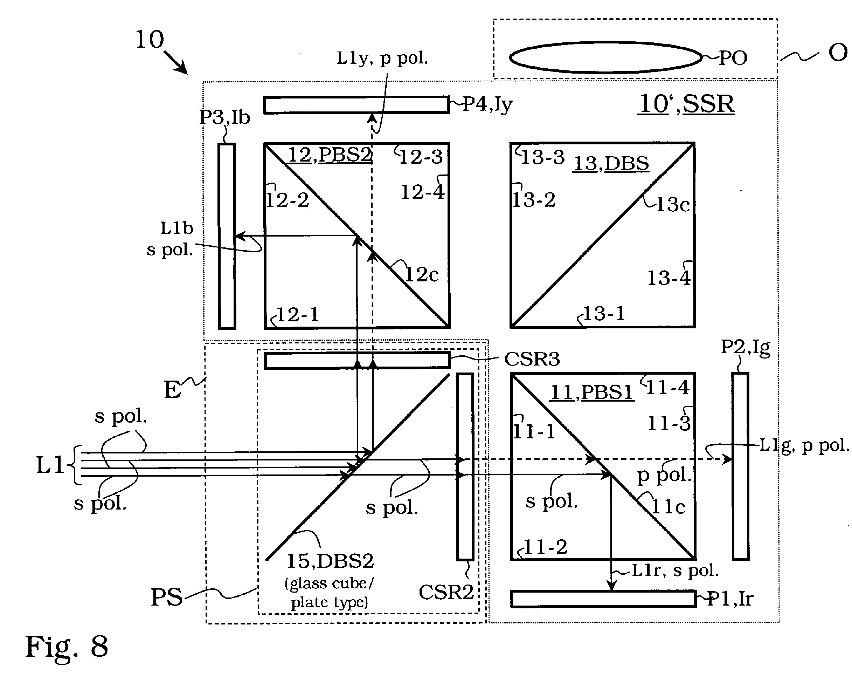

**A.** Fig. 3A shows the basic architecture of this invention. It consists of two polarizing beam splitters PBS1 and PBS2, one dichroic beam splitter DBS and four display panels P1, P2, P3, and P4. The two PBS transmit p-polarized light and reflect s-polarized light, the DBS reflects a spectral part of the white light and transmits the complementary one. The panels reflect light and change the polarization from s to p (or p to s) when a pixel is switched ON and they keep the polarization of the reflected light unchanged when a pixel is switched OFF. Each two panels are attached to one PBS at two adjacent surfaces. Another surface of each PBS is the input surface, where the light from the illumination part enters. The remaining surface of each PBS is the output-surface, where the light comes out and enters the DBS. The light coming from PBS2 is reflected, the light coming from PBS1 is transmitted by the DBS. After recombination by the DBS the light enters a projection lens which projects the partial images superimposed onto a screen. The spectrum of the incident white light is divided into four, completely or partly distinct, spectral parts SP1, SP2, SP3, SP4. Each two spectral parts enter one PBS, e.g. SP1 and SP2 enter PBS1; SP3 and SP4 enter PBS2, as shown in Fig. 3A. The spectral parts of each PBS have complementary polarization states, e.g. SP1 is s- and SP2 is p-polarized; SP3 is s- and SP4 is p-polarized. The p-polarized spectral parts SP2 and SP4 are transmitted by the respective PBS and hit the corresponding image panels P2 and P4 respectively. The s-polarized spectral parts SP1 and SP3 are reflected by the respective PBS and hit the corresponding image panels P1 and P3 respectively. Being reflected by the image panels, the polarization state is changed when the image pixel is switched ON (Fig. 3B) or the polarization state remains unchanged when the image pixel is switched OFF (Fig. 3C).
B. In the OFF state the light being reflected by the image panels Panel2 and Panel4 is still p-polarized. Ideally this p-polarized light should be transmitted by the PBS completely. But as a general attribute of PBS, a remarkable amount of p-polarized light (typical about 10 %) is reflected by the PBS and consequently projected to the screen, thus raising the black-level and reducing the contrast (Fig. 4). As a solution colour sensitive "clean-up" polarizers CSP1 and CSP2 can be used, which block the p-polarized light in the spectral range of the spectral parts SP2 and SP4 respectively. In order to let through the light in the ON state, the CSP1 must at the same time transmit p-polarized light in the spectral part SP1 and s-polarized light in the spectral part SP2. Just as CSP2 must transmit p-polarized light in the spectral part SP3 and s-polarized light in the spectral part SP4. Different types of spectral sensitive "clean-up" polarizers can be used:
   i) Cholesteric polarizers, where the p-polarized components of the spectral parts SP2 respectively SP4 are reflected.
   ii) Dye type polarizers, where the p-polarized components of the spectral parts SP2 respectively SP4 are absorbed.
   iii) A combination of a spectral sensitive half-wave retarder with a conventional absorbing broadband polarizer. In this case the spectral sensitive half-wave retarder changes the polarization of only the spectral parts SP2 respectively SP4 to s-polarization (or SP1 respectively SP3 to p-polarization). After that the absorbing broadband polarizer absorbs all s-polarized light (or p-polarized light).
C. The polarizing beam splitters PBS can be either of glass cube type with a dielectric polarizing beam splitter coating between prisms or they can be of plate type with a wire-grid beam splitter on a plane substrate.
D. The dichroic beam splitter DBS can be either of glass cube type with a dielectric dichroic coating between prisms or it can be of plate type with a dielectric dichroic coating on a plane substrate.
E. The transmittance / reflectance of the dichroic beam splitter DBS is generally dependent on the polarization state. Half-wave retarders, of broadband type as well as colour selective type, could be placed between the PBS and DBS in order to adapt the polarization state of the different spectral parts to fit with the polarization characteristic of the DBS.
F. A third PBS, either of glass- cube type or of wire-grid type, is placed between PBS1 and PBS2. Light is incident as shown in Fig. 5. This additional PBS guarantees a better polarization degree of the incident light and consequently a better system contrast.

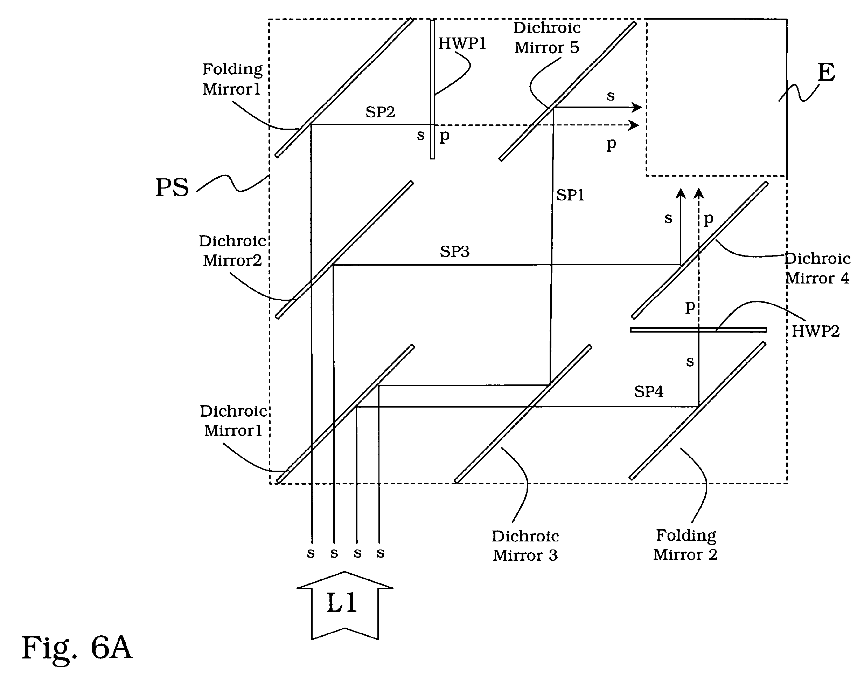

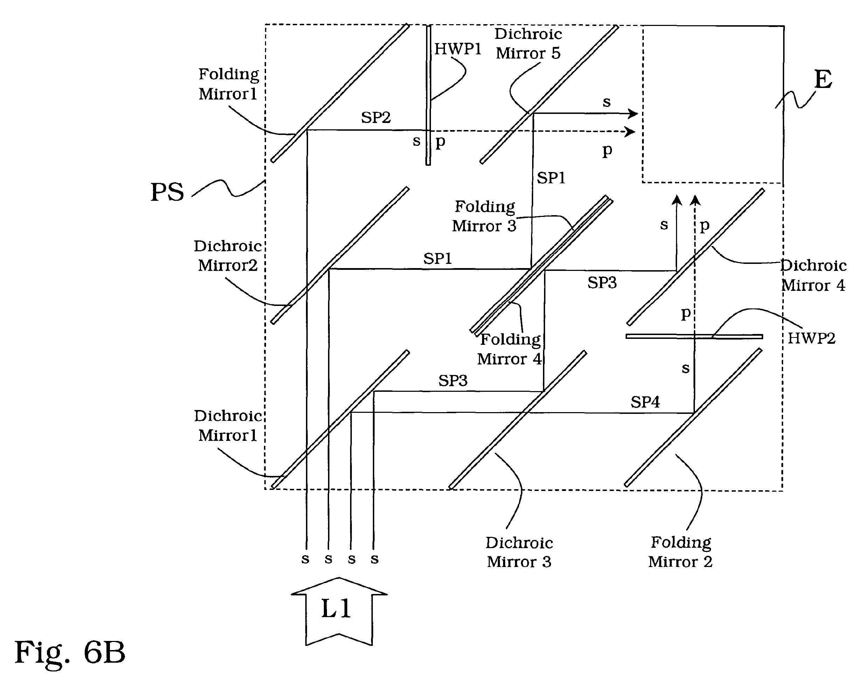

G. Fig. 6 describes, how to split white light into four spectral parts SP1, SP2, SP3 and SP4 which have the appropriate polarization states. It can be used together with both the embodiment from Figure 3a as well as the embodiment from Figure 5. The half-wave plates (HWP) change the polarization state of the spectral parts SP2 respectively SP4 into p-polarization. Lenses which might be necessary to guide the light are not drawn in Fig. 6.

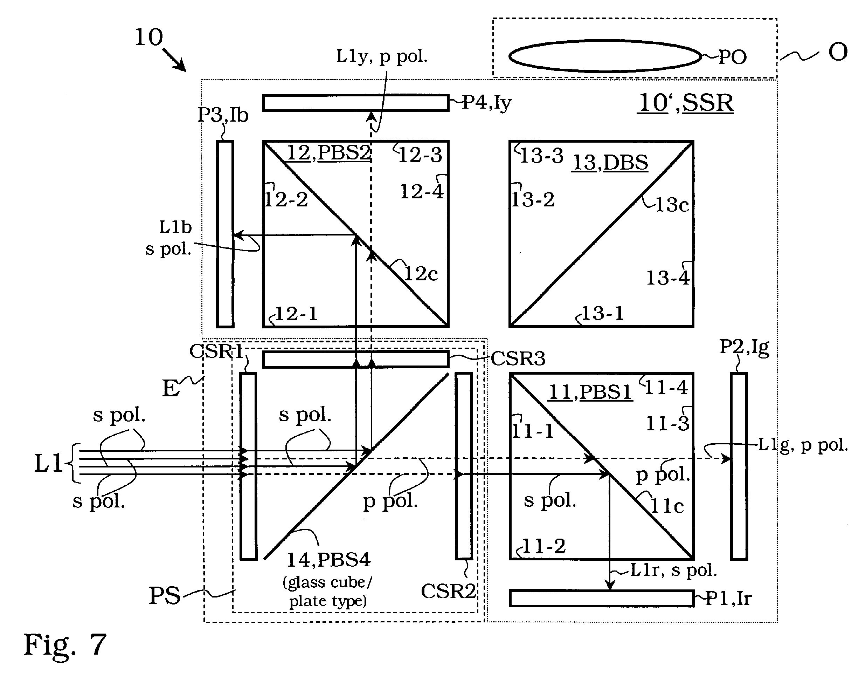

H. Fig. 7 describes a very compact way of how to split white light into four spectral parts SP1, SP2, SP3 and SP4 which have the appropriate polarization states. It requires colour selective retarders CSR in order to set the different spectral parts to the appropriate polarization states. The colour selective retarders (CSR) change the polarization state of only a spectral part and let the complementary spectral part unchanged, e.g. SP1 and SP2 are changed by CSR1 from s- to p-polarization while SP3 and SP4 keep up the s-polarization.
**I**. Fig. 8 describes another way of how to split white light into four spectral parts SP1, SP2, SP3 and SP4 which have the appropriate polarization states. A second dichroic beam-splitter DBS2, either of glass-cube type or of plate-type, is placed between PBS1 and PBS2. The DBS2 reflects the spectral parts SP3 and SP4 and transmits the spectral parts SP1 and SP2. Colour selective retarders CSR1 and CSR2 are required to change the polarization state of SP2 respectively SP4 into p-polarization (or SP1 respectively SP3 into s-polarization).

These and further aspects of the present invention are further elucidated be the following description taking reference to the accompanying figures.
- **Fig. 1A**: is a diagram which describes the spectral properties of the light generated by a prior art RGB projector.
- **Fig. 1B**: is a diagram which describes the spectral properties of an inventive RGBY projector.
- **Fig. 2**: is a diagram which describes the colour gamut with respect to the spectra shown in Fig. 1A and 1B.
- **Figs. 3A - C**: are schematical and cross-sectional views demonstrating the basic architectures of an embodiment of the inventive image generating unit.
- **Fig. 4**: is a schematical and cross-sectional view of another embodiment of the inventive image generating unit.
- **Figs. 5 - 8**: are schematical and cross-sectional views of further embodiments of the inventive image generating unit.

In the following and in the figures similar or equivalent structures or elements having similar or equivalent functionalities are denotes by identical reference symbols. A detailed description is not repeated in each case of their occurrence.

Fig. 1A is a diagram which demonstrates the light intensity in arbitrary units as a function of the wavelength of the light and in particular for the different spectral components red, green, and blue in a prior art RGB projector using a UHP lamp as the primary light source. From Fig. 1A it turns out that in the range of 570 nm to 590 nm, i.e. in the yellow range there is a substantial loss of light which is not used in prior art RGB projector units.

In contrast thereto Fig. 1B is a diagram which shows the spectral properties of a RGBY projector in the sense of an inventive image generating unit. Here additionally a yellow component in the above mentioned range is adapted and used in order to generate a fourth partial image. Therefore, according to the present invention the yellow range which is lost and wasted in prior art projectors is used in the present invention and therefore contributes to the overall light and colour saturation.

Fig. 2 shows the colour gamut for the situations shown in Fig. 1A and 1B.

The sequence of Figs. 3A, 3B and 3C demonstrates by means of schematical and cross-sectional side views a first embodiment of the inventive image generating unit 10. Each of the Figs. 3A, 3B, and 3C refer to different states of the respective provided first to fourth image generating means or imaging panels P1 to P4 respectively.

The constitutional entities of the embodiment shown in Figs. 3A to 3C will be explained in detail by taking reference to Fig. 3A. The respective explanations can be extended through the embodiments shown in Figs. 3B and 3C as well as to the embodiments shown in the further Figs. 4 to 8.

The essential parts of the embodiment of the image generating unit 10 according to the present invention as shown in Fig. 3A are a light entrance section E, a light output section O, and there between a spectral splitting, image generating, and spectral recombining or recombination section SSR with an optical arrangement 10' which is built up by a first and a second polarization selective or polarizing beam splitting device 11, PBS 1 and 12, PBS2, respectively, by a single dichroic beam splitting device 13, DBS, and by first, second, third, and fourth image generating means or imager panels P1, P2, P3 and P4, respectively. According to the present invention this spectral splitting, image generating, and spectral recombining or recombination section SSR with the mentioned optical arrangement 10' realizes the basic functionalities of the inventive image generating unit 10, i.e. the spectral splitting functionality, the image generating functionality as well as the spectral recombination functionality.

The first polarization selective or polarizing beam splitting device 11, PBS1 comprises first, second, third, and fourth faces 11-1, 11-2, 11-3, and 11-4, respectively, as well as a polarization selective or polarizing interface 11c. These faces are planar. The first to fourth faces 11-1, ..., 11-4 form in cross-sectional view a square. Therefore in the embodiment shown in Figs. 3A - 3C said first polarization selective or polarizing beam splitting device 11, PBS1 forms a cube or a square. The same holds for the second polarization selective or polarizing beam splitting device 12, PBS2 which also comprises first, second, third, and fourth faces 12-1, 12-2, 12-3, and 12-4, respectively, as well as a polarization selective or polarizing interface 12c.

The provided first and second image generating means P1 and P2 are signed to said first polarization selective or polarizing beam splitting device 11, PBS 1 and in particular they are arranged in parallel and in proximity to said second and to said third face 11-2 and 11-3, respectively. Said first and second image generating means P1 and P2 are adapted and arranged in order to generate said first and said second partial images Ir and Ig, respectively. For instance said first and second image generating means may be reflective LCD displays.

Said third and fourth image generating means P3 and P4 are adapted in order to generate said third and fourth partial image Ib and Iy, respectively. These panels P3 and P4 may also be reflective LCD displays. Thy are assigned to said second polarization selective or polarizing beam splitting device 12, PBS2 and in particular to the second and third face 12-2 and 12-3, thereof and in particular in parallel relation to these second and third faces 12-2 and 12-3, respectively.

The first, second, third, and fourth image generating means P1, P2, P3 and P4 may refer to the colours or spectral ranges red, green, blue, and yellow, respectively.

The first face 11-1 of the first polarization selective or polarizing beam splitting device 11 deals as a input surface for receiving first and second primary illumination light components L1r, L1g, respectively, in particular in a first or s polarized polarization state and in a second or p polarized polarization state, respectively. The polarization selective or polarizing interface 11c reflects the first primary illumination light component L1r from said first face 11-1 to said second face 11-2 where said first primary illumination light component L1r leaves the first polarization selective or polarizing beam splitting device 11 in order to irradiate the first image generating means P1 as is shown in Fig. 3A. In the on state, as shown in Fig. 3B, said first image generating means P1 generates a first secondary illumination light component L2r as light of said first partial image Ir in said second or p polarized polarization state. Said first secondary illumination light component L2r re-enters the first polarization selective or polarizing beam splitting device 11 through said second face 11-2 thereof and the polarization selective or polarizing interface 11c transmits said first secondary illumination light component L2r to said third face 11-3 of said first polarization selective or polarizing beam splitting device in the direction of a first face 13-1 of the dichroic beam splitting device 13, DBS.

In an analogous way the second primary illumination light component L1g is transmitted by said polarization selective or polarizing interface 11c from said first face 11-1 to said third face 11-3 of said first polarization selective or polarizing beam splitting device 11 in order to leave said first polarization selective or polarizing beam splitting device through its third face 11-3 in order to irradiate said second image generating means P2.

Said second image generating means P2 in an on state, as shown in Fig. 3B generates a second secondary illumination light component L2g as light of said second generated partial image Ig which enters said first polarization selective or polarizing beam splitting device through its third face 11-3. The polarization selective or polarizing interface 11c reflects said second secondary illumination light component L2g from the third face 11-3 to said fourth face 11-4 of said first polarization selective or polarizing beam splitting device 11 to leave the same and to enter the proximately arranged dichroic beam splitting device 13, DBS through its first face 13-1.

Similar operations and actions are given with respect to the third and fourth primary illumination light components L1b and L1y, respectively.

Fig. 3C demonstrates the embodiment of Fig. 3 with the first to fourth image generating means P1, P2, P3, and P4, respectively, in its off state, where the received first, second, third, and fourth primary illumination light components L1r, L1g, L1b, and L1y are reflected unchanged, i.e. without changing the polarization state of the incident light. Thereby, no light enters the dichroic beam splitting device 13, DBS.

The dichroic beam splitting device 13, DBS is arranged and/or adapted in order to recombine the secondary illumination light components L2r, L2g, L2b, and L2y of the first to fourth generated partial images Ir, Ig, Ib, Iy, respectively, in order to yield secondary illumination light L2 as light for the image I to be displayed as a superposition of said first fourth partial images Ir, Ig, Ib, Iy, respectively.

Said dichroic beam splitting device 13, DBS therefore comprises first, second, third and fourth faces 13-1, 13-2, 13-3, and 13-4, respectively as well as a spectral selective and spectral splitting interface 13c which is selective with respect to the spectral range of said first and said second secondary illumination light components L2r and L2g, respectively, on the one hand and the spectral range SP3, SP4 of said third and fourth secondary illumination light components L2b and L2y, respectively.

Said dichroic beam splitting device 13, DBS receives through its first face 13-1 the light of said first and said second partial images Ir, Ig, respectively, i.e. said first and said second secondary illumination light components L2r, L2g, respectively, which are then transmitted through the spectral splitting and spectral selective interface 13c to the third face 13-3 of said dichroic beam splitting device 13, DBS in order to leave said dichroic beam splitting device 13, DBS through said third face 13-3 thereof.

The light of said generated third and fourth partial images Ib and Iy, respectively, i.e. said third and fourth secondary illumination light components L2b and L2y, respectively, enters said dichroic beam splitting device 13, DBS through its second surface 13-2 thereof and is then reflected to said third surface 13-3 in order to leave said dichroic beam splitting device 13, DBS.

The light of said first to said fourth partial images Ir, Ig, Ib, and Iy, respectively, is received by provided projection optics in order to display an image I as a superposition of said partial images Ir, Ig, Ib, and Iy.

The embodiment shown in Fig. 4 is similar to the embodiment shown in Figs. 3A to 3C. However, between said first polarization selective or polarizing beam splitting device 11 and said dichroic beam splitting device 13 as well as between said second polarization selective or polarizing beam splitting device 12 and said dichroic beam splitting device 13 in each case colour sensitive polarizers in the sense of polarization correction units ZSP1 and ZSP2 respectively, are provided, which are adapted and/or arranged in order to clean up the second and fourth spectral components SP2 and SP4, i.e. said second and fourth secondary illumination light components L2g and L2y, respectively, from contained p polarized light as is shown in Fig. 4.

Figs. 5 to 8 demonstrate different possibilities of pre-splitting and spectral separating the incoming white light.

These, further and more general aspects of the present invention will also be described in other words in the following:
According to a more general aspect of the present invention an image generating unit is provided:
   - which is adapted and/or arranged:

   - in order to receive primary illumination light L 1,
   - in order to spectrally split from said primary illumination light L1 first, second, third, and fourth primary illumination light components L1r, L1g, L1b, L1y which are at least essentially spectrally disjunced, non-overlapping and/or complementary with respect to each other and with respect to said primary illumination light L1,
   - in order to generate based on said first, second, third, and fourth primary illumination light components L1r, L1g, L1b, L1y first, second, third and fourth secondary illumination light components L2r, L2g, L2b, L2y for first, second, third, and fourth partial images Ir, Ig, Ib, Iy, respectively, of an image I to be generated and to be displayed, and
   - in order to recombine said first, second, third and fourth secondary illumination light components L2r, L2g, L2b, L2y of said first, second, third, and fourth partial images Ir, Ig, lb, Iy in order to thereby generate and output secondary illumination light L2 as light for said image I to be generated and to be displayed,
   - a light entrance section E is provided which is adapted and/or arranged in order to receive said primary illumination light L1,
   - a spectral splitting, image generating and spectral recombination section SSR is provided which is or comprises an optical arrangement 10' of a first and a second polarization selective of polarizing beam splitting device 11, PBS1; 12, PBS2, of first, second and third, fourth image generating means P1, P2, P3, P4 associated therewith, respectively, and of one single dichroic beam splitting device 13, DBS,
   - a light output section O is provided which is adapted and/or arranged in order to output said secondary illumination light L2, and
   - said spectral splitting functionality, said image generating functionality and said spectral recombination functionality or a basic part thereof are in its entirety or essentially realized by the optical arrangement 10' of or within said spectral splitting, image generating, and spectral recombination section SSR of said first and second polarization selective or polarizing beam splitting devices 11, PBS1; 12, PBS2, of said first, second, third, and fourth image generating means P1, P2, P3, P4, and of said one dichroic beam splitting device 13, DBS of said spectral splitting, image generating and spectral recombination section SSR.

Additionally or alternatively, said first polarization selective or polarizing beam splitting device 11, PBS1 has assigned and/or arranged in close functional and/or spatial relationship thereto said first and said second image generating means P1, P2 for said first and said second partial images Ir, Ig, respectively, to be generated, in particular with respect to second and third faces 11-2, 11-3, respectively, thereof.

Additionally or alternatively, said second polarization selective or polarizing beam splitting device 12, PBS2 has assigned and/or arranged in close functional and/or spatial relationship thereto said third and fourth image generating means P3, P4 for said third and fourth partial images Ib, Iy, respectively, to be generated, in particular with respect to second and third faces 12-2, 12-3, respectively, thereof.

Additionally or alternatively, said first polarization selective or polarizing beam splitting device 11, PBS1 comprises a first face 11-1 which is adapted and/or arranged:
- in order to receive said first primary illumination light component L1r of said primary illumination light L1 as said light for said first partial image Ir to be generated, in particular in a first or s polarized polarization state and/or
- in order to receive said second primary illumination light component L1g of said primary illumination light L1 as light for said second partial image Ig to be generated, in particular in a second or p polarized polarization state.

Additionally or alternatively, said first polarization selective or polarizing beam splitting device 11, PBS1 comprises a second face 11-2 which is adapted and/or arranged:
- in order to have said received first primary illumination light component L1r of said primary illumination light L1 as light for said first partial imaging Ir to be generated left said first polarization selective or polarizing beam splitting device 11, PBS1, in particular in said first or s polarized polarization state and/or in particular in order to directly or indirectly direct said first primary illumination light component L1r to said first image generating means P1 and/or
- in order to receive a first secondary illumination light component L2r of secondary illumination light L2 as light of said generated first partial image Ir, in particular directly or indirectly from said first image generating means P1 and/or in particular in said second or p polarized polarization state.

Additionally or alternatively, said first polarization selective or polarizing beam splitting device 11, PBS1 comprises a third face 11-3 which is adapted and/or arranged:
- in order to have said received second primary illumination light component L1g of said primary illumination light L1 as light for said second partial imaging Ig to be generated left said first polarization selective or polarizing beam splitting device 11, PBS1, in particular in said second or p polarized polarization state and/or in particular in order to directly or indirectly direct said second primary illumination light component L1g to said second image generating means P2 and/or
- in order to receive a second secondary illumination light component L2g of said secondary illumination light L2 as light of said generated second partial image Ir, in particular directly or indirectly from said second image generating means P2 and/or in particular in said first or s polarized polarization state.

Additionally or alternatively, said first polarization selective or polarizing beam splitting device 11, PBS1 comprises a fourth face 11-4 which is adapted and/or arranged:
- in order to have said first secondary illumination light component L2r in particular in said second or p polarized polarization state as light of said generated first partial image Ir and/or said second secondary illumination light component L2g in particular in said first or s polarized polarization state as light of said generated second partial image Ig left said first polarization selective or polarizing beam splitting device 11, PBS1 and/or
- in particular in order to directly or indirectly direct said first secondary illumination light compnoent L2r in particular in said second or p polarized polarization state as light of said generated first partial image Ir and/or said second secondary illumination light component L2g in particular in said first or s polarized polarization state as light of said generated second partial image Ig to said dichroic beam splitting device 13, DBS and/or in particular via a first face 13-1 thereof.

Additionally or alternatively, said first polarization selective or polarizing beam splitting device 11, PBS1 comprises a polarization selective or polarizing interface 11 c which is arranged and / or adapted:
- in order to essentially reflect light of said first or s polarized polarization state and
- in order to essentially transmit light of said second or p polarized polarization state.

Additionally or alternatively, said first polarization selective or polarizing beam splitting device 11, PBS1 comprises a polarization selective or polarizing interface 11c which is arranged and/or adapted:
- in order to essentially reflect said first primary illumination light component L1r from said first face 11-1 of said first polarization selective or polarizing beam splitting device 11, PBS1 to said second face 11-2 of said first polarization selective or polarizing beam splitting device 11, PBS 1 as light for said first partial image Ir to be generated and/or
- in order to essentially transmit said second primary illumination light component L1g from said first face of said first polarization selective or polarizing beam splitting device 11, PBS to said third face 11-3 of said first polarization selective or polarizing beam splitting device 11, PBS1 as light for said second partial image Ig to be generated and/or
- in order to essentially transmit said first secondary illumination light component L2r from said second face 11-2 of said first polarization selective or polarizing beam splitting device 11, PBS1 to said fourth face 11-4 of said first polarization selective or polarizing beam splitting device 11, PBS1 as light of said generated first partial image Ir, in particular in said second or p polarized polarization state and/or
- in order to essentially reflect said second secondary illumination light component L2g from said third face 11-3 of said first polarization selective or polarizing beam splitting device 11, PBS to said fourth face 11-4 of said first polarization selective or polarizing beam splitting device 11, PBS1 as light of said generated second partial image Ig, in particular in said first or s polarized polarization state.
   Additionally or alternatively, said first image generating means P1 is arranged in proximity to said second face 11-2 of said first polarization selective or polarizing beam splitting device 11, PBS 1, in particular parallely thereto, and/ or
- said second image generating means P2 is arranged in proximity to said third face 11-3 of said first polarization selective or polarizing beam splitting device 11, PBS1, in particular parallely thereto, and/or
- said dichroic beam splitting device 13, DBS is arranged in proximity to said fourth face 11-4 of said first polarization selective or polarizing beam splitting device 11, PBS 1 in particular with its first face 13-1 parallel thereto.

Additionally or alternatively, said second polarization selective or polarizing beam splitting device 12, PBS2 comprises a first face 12-1 which is adapted and/or arranged:
- in order to receive said third primary illumination light component L1b of said primary illumination light L1 as said light for said third partial image Ib to be generated, in particular in a first or s polarized polarization state and/or
- in order to receive said fourth primary illumination light component L1y of said primary illumination light L1 as light for said fourt partial image Iy to be generated, in particular in a second or p polarized polarization state.

Additionally or alternatively, said second polarization selective or polarizing beam splitting device 12, PBS2 comprises a second face 12-2 which is adapted and/or arranged:
- in order to have said received third primary illumination light component L1b of said primary illumination light LIas light for said third partial imaging Ib to be generated left said second polarization selective or polarizing beam splitting device 12, PBSs, in particular in said first or s polarized polarization state and/or in particular in order to directly or indirectly direct said third primary illumination light component L1b to said third image generating means P3 and/or
- in order to receive a third secondary illumination light component L2b of said secondary illumination light L2 as light of said generated third partial image Ib in particular directly or indirectly from said third image generating means P3 and/or in particular in said second or p polarized polarization state.

Additionally or alternatively, said second polarization selective or polarizing beam splitting device 12, PBS2 comprises a third face 12-3 which is adapted and/or arranged:
- in order to have said received fourth primary illumination light component L1y of said primary illumination light L1 as light for said fourth partial imaging Iy to be generated left said second polarization selective or polarizing beam splitting device 12, PBS2, in particular in said second or p polarized polarization state and/or in particular in order to directly or indirectly direct said fourth primary illumination light component L1y to said fourth image generating means P4 and/or
- in order to receive a fourth secondary illumination light component L2y of said secondary illumination light L2 as light of said generated second partial image Ir in particular directly or indirectly from said fourth image generating means P4 and/or in particular in said first or s polarized polarization state.

Additionally or alternatively, said second polarization selective or polarizing beam splitting device 12, PBS2 comprises a fourth face 12-4 which is adapted and/or arranged:
- in order to have said third secondary illumination light component L2b in particular in said second or p polarized polarization state as light of said generated third partial image Ib and/or said fourth secondary illumination light component L2y in particular in said first or s polarized polarization state as light of said generated fourth partial image Iy left said second polarization selective or polarizing beam splitting device 12, PBS2 and/or
- in particular in order to directly or indirectly direct said third secondary illumination light compnoent L2b in particular in said second or p polarized polarization state as light of said generated third partial image Ib and/or said fourth secondary illumination light component L2y in particular in said first or s polarized polarization state as light of said generated fourth partial image Iy to said dichroic beam splitting device 13, DBS and/or in particular via a second face 13-2 thereof.

Additionally or alternatively, said second polarization selective or polarizing beam splitting device 12, PBS2 comprises a polarization selective or polarizing interface 12c which is arranged and/or adapted:
- in order to essentially reflect light of said first or s polarized polarization state and
- in order to essentially transmit light of said second or p polarized polarization state.

Additionally or alternatively, said second polarization selective or polarizing beam splitting device 12, PBS2 comprises a polarization selective or polarizing interface 12c which is arranged and/or adapted:
- in order to essentially reflect said third primary illumination light component L1b from said first face 12-1 of said second polarization selective or polarizing beam splitting device 12, PBS2 to said second face 12-2 of said second polarization selective or polarizing beam splitting device 12, PBS2 as light for said third partial image Ib to be generated, and/or
- in order to essentially transmit said fourth primary illumination light component L1y from said first face 12-1 of said second polarization selective or polarizing beam splitting device 12, PBS2 to said third face 12-3 of said second polarization selective or polarizing beam splitting device 12, PBS2 as light for said fourth partial image Iy to be generated, and/or
- in order to essentially transmit said third secondary illumination light component L2b from said second face 12-2 of said second polarization selective or polarizing beam splitting device 12, PBS2 to said fourth face 12-4 of said second polarization selective or polarizing beam splitting device 12, PBS2 as light of said generated third partial image Ib, in particular in said second or p polarized polarization state, and/or
- in order to essentially reflect said fourth secondary illumination light component L2y from said third face 12-3 of said second polarization selective or polarizing beam splitting device 12, PBS2 to said fourth face 12-4 of said second polarization selective or polarizing beam splitting device 12, PBS2 as light of said generated fourth partial image Iy, in particular in said first or s polarized polarization state.
   Additionally or alternatively, said third image generating means P3 is arranged in proximity to said second face 12-2 of said second polarization selective or polarizing beam splitting device 12, PBS2, in particular parallely thereto, and/or
- said fourth image generating means P4 is arranged in proximity to said third face 12-3 of said second polarization selective or polarizing beam splitting device 12, PBS2, in particular parallely thereto, and/or
- said dichroic beam splitting device 13, DBS is arranged in proximity to said fourth face 12-4 of said second polarization selective or polarizing beam splitting device 12, PBS2 in particular with its first face 13-2 parallel thereto.

Additionally or alternatively, said dichroic beam splitting device 13, DBS comprises a first face 13-1 which is adapted and/or arranged in order to receive said first secondary illumination light component L2r as light of said generated first partial image Ir and/or said second secondary illumination light component L2g as light of said generated second partial image Ig.

Additionally or alternatively, said dichroic beam splitting device 13, DBS comprises a second face 13-2 which is adapted and/or arranged in order to receive said third secondary illumination light component L2b as light of said generated third partial image Ib and/or said fourth secondary illumination light component L2y as light of said generated fourth partial image Iy.

Additionally or alternatively, said dichroic beam splitting device 13, DBS comprises a third face 13-3 which is adapted and/or arranged in order to have said received first, second, third and/or fourth secondary illumination light components L2r, L2g, L2b, L2y of said secondary illumination light L2 as light of said generated first, second, third, and fourth partial images Ir, Ig, Ib, Iy, respectively, left said dichroic beam splitting device 13, DBS and in particular in order to directly or indirectly direct said received first, second, third, and/or fourth secondary illumination light components L2r, L2g, L2b, L2y of said secondary illumination light L2 as light of said generated first, second, third, and fourth partial images Ir, Ig, lb, Iy, respectively, to provided projection optics PO.

Additionally or alternatively, said dichroic beam splitting device 13, DBS comprises a spectral selective or spectrally separating interface 13c which is adapted and/or arranged:
- in order to essentially transmit light of or within a first spectral range SP1, SP2 from said first face 13-1 of said dichroic beam splitting device 13, DBS to said third face 13-3 of said dichroic beam splitting device 13, DBS and/or
- in order to essentially reflect light of or within a second spectral range SP3, SP4 from said second face 13-2 of said dichroic beam splitting device 13, DBS to said third face 13-3 of said dichroic beam splitting device 13, DBS.

Additionally or alternatively, said dichroic beam splitting device 13, DBS comprises a spectral selective or spectrally separating interface 13c which is adapted and/or arranged:
- in order to essentially transmit said first and said second secondary illumination light components L2r, L2g of said secondary illumination light L2 as light of said first and said second generated partial images Ir, Ig, respectively from said first face 13-1 of said dichroic beam splitting device 13, DBS to said third face 13-3 of said dichroic beam splitting device 13, DBS and/or
- in order to essentially reflect said third and said fourth secondary illumination light components L2b, L2y of said secondary illumination light L2 as light of said third and said fourth generated partial images Ib, Iy from said second face 13-2 of said dichroic beam splitting device 13, DBS to said third face 13-3 of said dichroic beam splitting device 13, DBS.

Additionally or alternatively, between said first polarization selective or polarizing beam splitting device 11, PBS1 and said dichroic beam splitting device 13, DBS and/or between said second polarization selective or polarizing beam splitting device 12, PBS2 and said dichroic beam splitting device 13, DBS there is provided a respective polarization correction unit CSP1, CSP2 which is in each case adapted and/or arranged in order to change a respective polarization state of inciding light to a s polarized polarization state or to a p polarized polarization state, in particular in order to enhance the reflection functionality and/or the transmission functionality of the dichroic beam splitting device 13, DBS in particular with respect to said first, second, third, and fourth secondary illumination light component L2r, L2g, L2b, L2y.

### Cited References

(1) S. Roth et al., "Wide Gamut, High Brightness Multiple Primaries Single Panel Projection Displays", SID 2003 Digest, pages 118-121;

### Reference Symbols

- **10**: image generating unit according to the present invention
- **10'**: optical arrangement
- **11**: first polarization selective or polarizing beam splitting device, first PBS cube
- **11-1**: first face
- **11-2**: second face
- **11-3**: third face
- **11-4**: fourth face
- **11c**: polarization selective or polarizing interface
- **12**: second polarization selective or polarizing beam splitting device, second PBS cube
- **12-1**: first face
- **12-2**: second face
- **12-3**: third face
- **12-4**: fourth face
- **12c**: polarization selective or polarizing interface
- **13**: dichroic beam splitting device, dichroic beam splitting cube
- **13-1**: first face
- **13-2**: second face
- **13-3**: third face
- **13-4**: fourth face
- **13c**: spectral splitting and spectral selective interface
- **DBS**: dichroic beam splitting device, dichroic beam splitting cube
- **E**: light entrance section
- **I**: image to be generated and to be displayed
- **Ir**: first partial image, red partial image
- **Ig**: second partial image, green partial image
- **Ib**: third partial image, blue partial image
- **Iy**: fourth partial image, yellow partial image
- **L1**: primary illumination light
- **L1r**: first primary illumination light component, red component
- **L1g**: second primary illumination light component, green component
- **L1b**: third primary illumination light component, blue component
- **L1y**: fourth primary illumination light component, yellow component
- **L2**: secondary illumination light
- **L2r**: first secondary illumination light component, red component
- **L2g**: second secondary illumination light component, green component
- **L2b**: third secondary illumination light component, blue component
- **L12y**: fourth secondary illumination light component, yellow component
- **O**: light output section
- **PBS 1**: first polarization selective or polarizing beam splitting device, first beam splitting cube
- **PBS2**: second polarization selective or polarizing beam splitting device, second beam splitting cube
- **P1**: first image generating means
- **P2**: second image generating means
- **P3**: third image generating means
- **P4**: fourth image generating means
- **SP1**: first spectral range
- **SP2**: second spectral range
- **SP3**: third spectral range
- **SP4**: fourth spectral range
- **SSR**: spectral splitting, image generating, and spectral recombining or recombination section

## Claims

1. Image generating unit,
which is adapted/or arranged:
- in order to generate in a first part PS primary illumination light L1, which comprises four spectral ranges SP1, SP2, SP3, SP4, which can be spectrally disjunct or overlapping and with light components L1 and L1b corresponding to the spectral ranges SP1 and SP3, respective, being s-polarized and light components L1g and L1y corresponding to spectral ranges SP2, SP4, respective, being p-polarized,
- in order to receive in a second part SSR primary illumination light L1, which comprises four spectral ranges SP1, SP2, SP3, SP4, which can be spectrally disjunct or overlapping and with light components L1r and L1b corresponding to the spectral ranges SP1 and SP3, respective, being s-polarized and light components L1g and L1y corresponding to spectral ranges SP2 and SP4, respective, being p-polarized,
- in order to generate based on said first, second, third and fourth primary illumination light components L1r, L1g, L1b, L1y first, second, third and fourth secondary illumination light components L2r, L2g, L2b, L2y for first, second, third and fourth partial images Ir, Ig, Ib, Iy, respectively, of an image I to be generated and to be displayed, and
- in order to recombine said first, second, third and fourth secondary illumination light components L2r, L2g, L2b, L2y of said first, second, third and fourth partial images Ir, Ig, Ib, Iy in order to thereby generate and output secondary illumination light L2 as light for said image I to be generated and to be displayed,
- wherein a light entrance section E is provided which is adapted and/or arranged in order to receive said primary illumination light L1,
- wherein a light output section O is provided which is adapted and/or arranged in order to output said secondary illumination light L2,
- wherein a first polarizing beam splitter PBS 1 is adapted to receive said first and second primary light components L1r, L1g, with a polarizing surface adapted to reflect s-polarized light toward a first image generating means P1 and to transmit p-polarized light toward a second image generating means P2,
- wherein a second polarizing beam splitter PBS2 is adapted to receive said third and fourth primary light components L1b, L1y, with a polarizing surface adapted to reflect s-polarized light toward a third image generating means P3 and to transmit p-polarized light toward a fourth image generating means P4,
- wherein said first polarizing beam splitter PBS1 is adapted to receive said first and second secondary light components L2r, L2g, which are reflected from said first and second image generating means P1, P2 and with a polarizing surface adapted to reflect s-polarized light and to transmit p-polarized light,
- wherein said second polarizing beam splitter PBS2 is adapted to receive said third and fourth secondary light components L2b, L2y, which are reflected from said third and fourth image generating means P3, P4 and with a polarizing surface adapted to reflect s-polarized light and to transmit p-polarized light,
- wherein a dichroic beam splitter DBS is adapted to receive through a first surface first and second secondary light components L2r, L2g and through a second surface third and fourth secondary light components L2b, L2y and with a dichroic surface adapted to transmit first and second secondary light components L2r, L2g and to reflect third and fourth secondary light components L2b, L2y and
- wherein said dichroic beam splitter DBS is adapted to output the first, second, third and fourth secondary light components L2r, L2g, L2b, L2y through a third surface for first, second, third and fourth partial images Ir, Ig, Ib, Iy, respectively, of an image I to be generated and to be displayed.

2. Image generating unit according to any of the preceding claims,
wherein a fourth polarizing beam splitter PBS4 is adapted and/or arranged in said entrance section E in order to reflect said first primary light component L1r and to transmit said second primary light component L1g in direction of said first polarizing beam splitter PBS1, and to reflect said third primary light component L1b and to transmit said fourth primary light component L1y in direction of said second polarizing beam splitter PBS2.

3. Image generating unit according to any of the preceding claims,
wherein said first part PS is adapted and/or arranged:
- in order to receive illumination light L1, which is polarized e.g. s-polarized and which spectral range covers said first, second, third and fourth spectral ranges SP1, SP2, SP3, and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r,L1g,
- to combine the light of said third and fourth spectral ranges SP3, SP4 in a coincident and/or parallel light path in order to serve as said third and fourth primary light component L1b, L1y,
- wherein a first dichroic mirror is adapted and/or arranged in order to split light of said first and fourth spectral range SP1, SP4 from light of said second and third spectral range SP2, SP3,
- wherein a second dichroic mirror is adapted and/or arranged in order to split light of, said second spectral range SP2 from light of said third spectral range SP3,
- wherein a third dichroic mirror is adapted and/or arranged in order to split light of said first spectral range SP1 from light of said fourth spectral range SP4,
- wherein optical means e.g. a folding mirror and a fifth dichroic mirror are adapted and/or arranged in order to combine light of said first spectral range SP1 with light of said second spectral range SP2 to a coincident and/or parallel light path as first and second primary light component L1r, L1g, respectively,
- wherein optical means e.g. a folding mirror and a fourth dichroic mirror are adapted and/or arranged in order to combine light of said third spectral range SP3 and light of said fourth spectral range SP4 to a coincident and/or parallel light path as third and fourth primary light component L1b, L1y, respectively,
- wherein retarder plates e.g. halve wave plates, HWP are adapted and/or arranged in order to change and/or keep the polarization of said first and third primary light component L1r, L1b in a s-polarized mode and of said second and fourth primary light component L1g, L1y in a p-polarized mode.

4. Image generating unit according to any of the preceding claims,
wherein said first part is adapted and/or arranged:
- in order to receive illumination light L1, which is polarized e.g. s-polarized and which spectral range covers said first, second, third and fourth spectral ranges SP1, SP2, SP3, and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r, L1g,
- to combine the light of said third and fourth spectral ranges SP3, SP4 in a coincident and/or parallel light path in order to serve as said third and fourth primary light component L1b, L1y,
- wherein a first dichroic mirror is adapted and/or arranged in order to split light of said first and second spectral range SP1, SP2 from light of said third and fourth spectral range SP3, SP4,
- wherein a second dichroic mirror is adapted and/or arranged in order to split light of said first spectral range SP1 from light of said second spectral range SP2,
- wherein a third dichroic mirror is adapted and/or arranged in order to split light of said third spectral range SP3 from light of said fourth spectral range SP4,
- wherein optical means e.g. two folding mirrors and a fifth dichroic mirror are adapted and/or arranged in order to combine light of said first spectral range SP1 with light of said second spectral range SP2 to a coincident and/or parallel light path as first and second primary light component L1r, L1g, respectively,
- wherein optical means e.g. two folding mirrors and a fourth dichroic mirror are adapted and/or arranged in order to combine light of said third spectral range SP3 and light of said fourth spectral range SP4 to a coincident and/or parallel light path as third and fourth primary light component L1b, L1y, respectively,
- wherein retarder plates e.g. halve wave plates, HWP are adapted and/or arranged in order to change and/or keep the polarization of said first and third primary light component L1r, L1b in a s-polarized mode and light of said second and fourth primary light component L1g, L1y in a p-polarized mode.

5. Image generating unit according to any one of the preceding claims 3 or 4,
wherein said first, second, third and fourth spectral ranges SP1, SP2, SP3, and SP4 and accordingly said first, second, third and fourth primary light components are taken in any other order in particular to swap SP1 with SP3 and accordingly L1r with L1b.

6. Image generating unit according to any one of the preceding claims 3 to 5,
wherein said fourth dichroic mirror is replaced by a polarizing beam splitter.

7. Image generating unit according to any one of the preceding claims 3 to 6,
wherein said fifth dichroic mirror is replaced by a polarizing beam splitter.

8. Image generating unit according to claim 1,
wherein said first part PS is adapted and/or arranged:
- in order to receive illumination light L1, which is polarized e.g. s-polarized and which spectral range covers said first, second, third and fourth spectral ranges SP1, SP2, SP3 and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r, L1g,
- to combine the light of said third and fourth spectral ranges SP3, SP4 in a coincident and/or parallel light path in order to serve as said third and fourth primary light component L1b, L1y,
- wherein a first color selective retarder CSR1 is adapted and/or arranged in order to keep and/or change the polarization state of light of two of said four spectral ranges to be p-polarized and of light of the complementary spectral ranges to be s-polarized,
- wherein a fourth polarizing beam splitter is adapted and/or arranged in order to split the s-polarized light from the p-polarized light,
- wherein a second color selective retarder CSR2 is adapted and/or arranged in order to change and/or keep the polarization state of light of said first spectral range SP1 to be s-polarized and of light of said second spectral range SP2 to be p-polarized,
- wherein a third color selective retarder CSR3 is adapted and/or arranged in order to change and/or keep the polarization state of light of said third spectral range SP3 to be s-polarized and of light of said fourth spectral range SP4 to be p-polarized.

9. Image generating unit according to claim 1,
wherein said first part PS is adapted and/or arranged:
- in order to receive illumination light, which is polarized e.g. s-polarized and which spectral range covers said first, second, third and fourth spectral ranges SP1, SP2, SP3, and SP4,
- in order to change and/or keep the polarization state of light of said first and third spectral range SP1, SP3 to be s-polarized and of light of said second and fourth spectral range SP2, SP4 to be p-polarized,
- to combine the light of said first and second spectral ranges SP1, SP2 in a coincident and/or parallel light path in order to serve as said first and second primary light component L1r, L1g,
- to combine the light of said third and fourth spectral ranges SP3, SP4 in a coincident and/or parallel light path in order to serve as said third and fourth primary light component L1b, L1y,
- wherein a dichroic beam splitter DBS2 splitter is adapted and/or arranged in order to split light of said first and second spectral range SP1, SP2 from light of said third and fourth spectral range SP3, SP4,
- wherein said second color selective retarder CSR2 is adapted and/or arranged in order to change and/or keep the polarization state of light of said first spectral range SP1 to be s-polarized and of light of said second spectral range SP2 to be p-polarized,
- wherein said third color selective retarder CSR3 is adapted and/or arranged in order to change and/or keep the polarization state of light of said third spectral range SP3 to be s-polarized and of light of said fourth spectral range SP4 to be p-polarized.

10. Image generating unit according to any one of the preceding claims,
wherein between said first polarizing beam splitting device PBS 1 and said dichroic beam splitting device DBS and/or between said second polarizing beam splitting device PBS2 and said dichroic beam splitting device DBS there is provided a respective color selective polarizer CSP1, CSP2 which is in each case adapted and/or arranged in order to block the p-polarized part and to transmit the s-polarized part of said second and fourth secondary illumination light components, respective, and to transmit the p-polarized part of said first and third secondary illumination light components, respective, in particular in order to enhance the contrast of the optical engine.

11. Image generating unit according to any one of the preceding claims,
wherein between said first polarization selective or polarizing beam splitting device 11, PBS1 and said dichroic beam splitting device 13, DBS and/or between said second polarization selective or polarizing beam splitting device 12, PBS2 and said dichroic beam splitting device 13, DBS there is provided a respective polarization correction unit CSP1, CSP2 which is in each case adapted and/or arranged in order to change a respective polarization state of inciding light to a s polarized polarization state or to a p polarized polarization state, in particular in order to enhance the reflection functionality and/or the transmission functionality of the dichroic beam splitting device 13, DBS in particular with respect to said first, second, third, and fourth secondary illumination light component L2r, L2g, L2b, L2y.

12. Image generating unit according to claim 11,
wherein said first and/or second color selective polarizer comprises cholesteric layers which are stacked between two quarter-wave retarders.

13. Image generating unit according to claim 11,
wherein said first and/or second color selective polarizers comprise absorptive dyes which are transparent in said first and/or third spectral ranges, respective, and which work as absorptive polarizers in said second and/or fourth spectral ranges, respective.

14. Image generating unit according to claim 11,
wherein said first and/or second color selective polarizers comprise a color selective retarder in order to change the polarization of light in one spectral range by 90 degrees and to keep the polarization of light in the complementary spectral part unchanged and an absorptive broadband polarizer which is adapted and/or arranged in order to absorb light in either the changed or the unchanged polarization state.

15. Image generating unit according to any one of the preceding claims,
wherein said first, second, third and fourth spectral ranges SP1, SP2, SP3, SP4 correspondent to the colors red, green, blue and yellow in any combination.

16. Image generating unit according to any one of the preceding claims,
wherein said first, second, third and fourth spectral ranges SP1, SP2, SP3, SP4 correspondent to the colors red, green, blue and cyan in any combination.
